# EUROPÄISCHE PATENTSCHRIFT

(11) **EP 0 328 735 B1**
(45) Veröffentlichungstag und Bekanntmachung des Hinweises auf die Patenterteilung: **07.12.1994**
(21) Anmeldenummer: 88116080.8
(22) Anmeldetag: 29.09.1988
(51) Int. Cl.: H04L 7/04, H04B 14/02

(54) **Verfahren und Anordnung zum Ermitteln der Lage eines empfängerseitigen Worttaktes in Relation zu einem gesendeten PPM-Schema**
Method and device for the detection of the position of a local word-clock in relation to an emitted PPM scheme
Méthode et dispositif pour la détection de la position d'une horloge-mot locale en relation avec un PPM-schéma émis

(30) Priorität: 15.02.1988 DE 3804632
(43) Veröffentlichungstag der Anmeldung: 23.08.1989
(73) Patentinhaber: ANT Nachrichtentechnik GmbH, D-71522 Backnang (DE)
(72) Erfinder: Heichler, Johannes, Dipl.-Ing., D-7157 Murrhardt 3 (DE)

(56) Entgegenhaltungen:
- GB-A- 2 189 668
- US-A- 3 767 855
- PATENT ABSTRACTS OF JAPAN, Band 11, Nr. 209 (E-521)[2656], 7. Juli 1987 & JP-A-62 029 330
- PATENT ABSTRACTS OF JAPAN, Band 11, Nr. 224 (E-525)[2671], 21. Juli 1987 & JP-A-62 042 632
- ELECTRONICS INTERNATIONAL, Band 53, Nr. 23, Oktober 1980, Seite 260; "Chip looks for 64-bit word"

## Beschreibung

Die vorliegende Erfindung betrifft ein Verfahren und eine Anordnung zum Ermitteln der Lage eines empfängerseitigen Worttaktes in Relation zu einem gesendeten PPM-Schema.

Beim Ermitteln der Lage eines empfangsseitigen Worttaktes nach dem Stand der Technik wird über die Dauer zweier mit einem Bewertungssignal multiplizierten Werte integriert, anschließend der Betrag des Ergebnisses gebildet, diese Beträge ihrerseits über die Dauer einer größeren Anzahl von Worten integriert und das Ergebnis mit einer vorgegebenen Schwelle verglichen.
Die Integrationsstufen müssen bei einem Wechsel der Bitraten umgeschaltet werden.

Aus der US-A- 3,767,855 ist ein PPM-Kommunikationssystem bekannt, bei dem zur Wortsynchronisation die Zahl der Pulse während einer Wortperiode gezählt wird. Die Phase eines Wortes wird um einen Zeitschlitz verschoben, wenn mehr als ein Puls während einer Wortperiode empfangen wird in einer empfangsseitig vorgegebenen Wortphase. Ein empfangenes PPM-Wort wird dort demoduliert und in einem Register zwischengespeichert. Das zwischengespeicherte Wort wird mit dem nächsten eintreffenden Wort in einem Subtrahierer verarbeitet.

Aus Patent Abstracts of Japan, Band 11, Nr. 209, 7. Juli 1987, (E 521) [2656] ist ein Signaldekoder bekannt, bei dem Codeverletzungen detektiert werden. Wenn die Codeverletzungen einen vorgegebenen Schwellwert überschreiten, wird ein Phasenverschiebungs-Steuersignal generiert, das eine Rücksetzung um ein Bit bewirkt. Diese Rücksetzung wird so lange wiederholt, bis Wortsynchronisation erreicht ist. Durch diese Synchronisationsmethode ist kein zusätzliches Wortsynchronisationsssignal notwendig.

Aufgabe der vorliegenden Erfindung ist es, ein Verfahren und eine Anordnung anzugeben, bei dem sich bei Wechsel der Bitraten eine Umschaltung erübrigt.

Die Aufgabe wird gelöst durch die in den Kennzeichen der Ansprüche beschriebenen Maßnahmen.

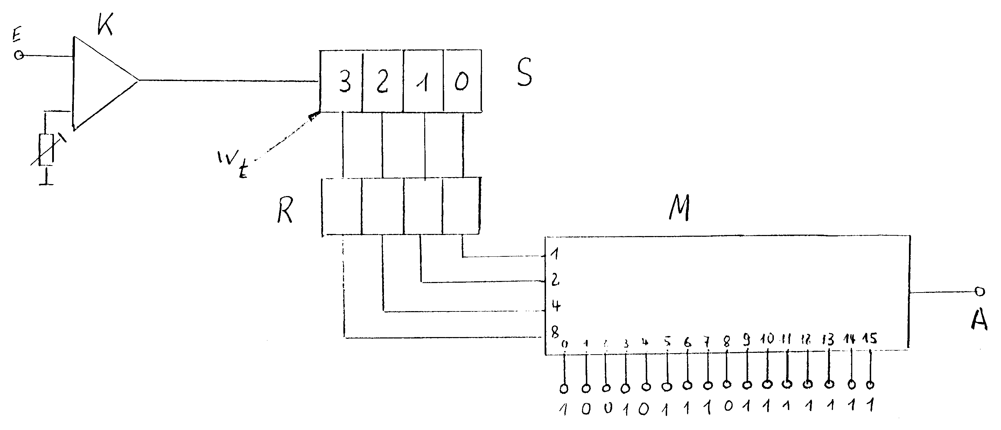

Die Erfindung soll jetzt anhand der Figur näher erläutert werden.

Das Eingangssignal wird auf den einen Eingang E eines Komparators K gelegt, dessen anderer Eingang an eine feste Spannung (Schwelle) angeschlossen ist. Das Ausgangssignal des Komparators wird mit Hilfe eines Taktes, der um das n-fache schneller ist als der Worttakt Wₜ eines PPM-Wortes, in das Schieberegister S übernommen. Hierbei gibt n die Zahl der Zeitschlitze im PPM-Wort an. Liegt das Eingangssignal oberhalb der vorgegebenen Schwelle, gibt der Komparator eine logische 1 ab, liegt es unterhalb, gibt der Komparator eine logische 0 ab. Das bedeutet, daß das im angenommenen Worttakt liegende PPM-Wort im Schieberegister S gespeichert ist. Dieses Wort wird in das Register R übernommen und zwischengespeichert. Es wird mit Hilfe des Multiplexers M mit allen möglichen Konfigurationen eines PPM-Wortes verglichen. An den Adresseingänqen 0-15 des Multiplexers M ist durch 1 und 0 eine mögliche Belegung angedeutet. Ist das im angenommenen Wortrahmen liegende PPM-Wort nicht in diesen möglichen Konfigurationen enthalten, gibt der Multiplexer M an seinem Ausgang A ein Signal ab, das einer Integrierschaltung zuführbar ist, deren Ausgang wiederum zu einer Regelschaltung führt. Diese Regelschaltung dient zur Einstellung der Phase des Worttaktes wₜ und kann damit zur Verschiebung des Worttaktes ausgenutzt werden.

## Patentansprüche

1. Verfahren zum Ermitteln der Lage eines empfängerseitigen Worttaktes in Relation zu einem gesendeten PPM-Schema, dadurch gekennzeichnet, daß auf dem Niveau einer Schwelle, die zwischen Minimum und Maximum der auftretenden empfangenen Signalamplitude liegt, entweder diejenigen Amplitudenwerte der Zeitschlitze des PPM-Wortes, die oberhalb dieser Schwelle oder diejenigen, die unterhalb liegen, als Werte in einem Schieberegister (S) mit Parallelausgängen gespeichert und mit Hilfe eines Multiplexers (M) so ausgewertet werden, daß alle Kombinationen der Signale an den Schieberegisterausgängen, die auf fehlerhafte Lage des Worttaktes (wₜ) deuten, ein Signal verursachen und daß nach numerischer Integration dieses Signals über die Dauer mehrerer Worte eine Phasenverschiebung des Worttaktes (wₜ) veranlaßt wird.

2. Anordnung zum Durchführen des Verfahrens nach Anspruch 1, dadurch gekennzeichnet, daß das Eingangs-PPM-Signal an den Eingang eines Amplitudenkomparators (K) gelegt ist, dessen Ansprechschwelle zwischen Minimum und Maximum der Eingangsamplitude liegt, daß der digitale Ausgang des Komparators (K) mit dem Eingang eines Schieberegisters (S) verbunden ist, dessen Stufenzahlen n gleich der Zahl der Zeitschlitze n des PPM-Wortes ist, daß die Ausgänge des Schieberegisters (S) zu einem Register (R) führen, dessen Ausgänge wiederum mit Signal-Eingängen (1 ... 8) eines Multiplexers (M) verbunden sind, daß der Multiplexer (M) separate Adresseingänge (0 ... 15) aufweist, über deren Signalbelegung die Signal-Eingänge (1 ... 8) des Multiplexers (M) so programmierbar sind, daß am Ausgang des Multiplexers (M) nur dann kein Signal entsteht, wenn das Signal an den Adress-Eingängen (0 ... 15) einem PPM-Wort entspricht, und daß der Ausgang des Multiplexers (M) auf eine Integrierschaltung gelegt ist, deren Ausgang wiederum zu einer Regelschaltung zur Einstellung der Phase des Worttaktes führt.

## Claims

1. Method of ascertaining the position of a local word clock in relation to an emitted pulse-position-modulation pattern, characterised thereby, that at the level of a threshold which lies between minimum and maximum of the occurring received signal amplitude either those amplitude values of the time slot of the pulse-position-modulation word which lie above this threshold or those which lie below are stored as values in a shift register (S) with parallel outputs and are so evaluated with the assistance of a multiplexer (M) that all combinations of the signals at the shift register outputs which indicate erroneous position of the word clock (wₜ) result in a signal and that after numerical integration of this signal a phase shifting of the word clock (wₜ) is caused over the duration of several words.

2. Arrangement for carrying out the method according to claim 1, characterised thereby that the input pulse-position-modulation signal is applied to the input of an amplitude comparator (K), the response threshold of which lies between minimum and maximum of the input amplitude, that the digital output of the comparator (K) is connected with the input of a shift register (S), the step number n of which is equal to the number of time slots n of the pulse-position-modulation word, that the outputs of the shift register (S) lead to a register (R), the outputs of which are in turn connected with signal inputs (1...8) of a multiplexer (M), that the multiplexer (M) has separate address inputs (0...15), by way of the signal occupation of which the signal inputs (1...8) of the multiplexer (M) can be so programmed that a signal is present at the output of the multiplexer (M) only when the signal at the address inputs (0...15) corresponds to a pulse-position-modulation word, and that the output of the multiplexer (M) is applied to an integrating circuit, the outputs of which in turn lead to a regulating circuit for the adjusting of the phase of the word clock.

## Revendications

1. Procédé pour la détection de la position d'un cycle de mot côté récepteur en relation avec un schéma PPM émis, caractérisé en ce qu'au niveau d'un seuil, qui se trouve entre un minimum et un maximum de l'amplitude de signal réceptionnée, survenant, soit ces valeurs d'amplitude des coupures de temps du mot PPM, qui se trouvent au-dessus de ce seuil, soit celles, qui se trouvent au-dessous, sont emmagasinées comme des valeurs dans un registre à décalage (S) ayant des sorties parallèles, et, à l'aide d'un multiplexeur (M), sont ainsi évaluées, que toutes les combinaisons des signaux aux sorties de registre à décalage, qui signifient une position défectueuse du cycle de mot (Wₜ), provoquent un signal, et, qu'après intégration numérique de ce signal, pendant la durée de plusieurs mots, un décalage de phase du cycle de mot (Wₜ) est provoqué.

2. Agencement pour la mise en oeuvre du procédé selon la revendication 1, caractérisé en ce que le signal PPM d'entrée est appliqué à l'entrée d'un comparateur d'amplitude (K), dont le seuil de réaction se trouve entre un minimum et un maximum de l'amplitude d'entrée, que la sortie numérique du comparateur (K) est reliée avec l'entrée d'un registre à décalage (S), dont le nombre d'étages n est égal au nombre des coupures de temps n du mot PPM, que les sorties du registre à décalage (S) conduisent à un registre (R), dont des sorties, à leur tour, sont reliées avec des entrées de signal (1...8) d'un multiplexeur (M), que le multiplexeur (M) présente des entrées d'adresse (0...15) séparées, par l'intermédiaire de l'occupation de signal desquelles, les entrées de signal (1...8) du multiplexeur (M) sont ainsi susceptibles d'être programmées, qu'à la sortie du multiplexeur (M), seulement alors, aucun signal ne prend naissance, lorsque le signal correspond aux entrées d'adresse (0...15) d'un mot PPM, et en ce que la sortie du multiplexeur (M) est appliquée sur un circuit d'intégration, dont la sortie, à son tour, conduit à un circuit de régulation pour l'ajustement de la phase du cycle de mot.
